# EUROPÄISCHE PATENTSCHRIFT

(11) **EP 1 808 086 B1**
(45) Veröffentlichungstag und Bekanntmachung des Hinweises auf die Patenterteilung: **28.07.2010**
(21) Anmeldenummer: 07100177.0
(22) Anmeldetag: 05.01.2007
(51) Int. Cl.: A23L 3/36, F25D 3/11, F25D 13/06, F25D 21/00

(54) **Vorrichtung zum Kühlen von Produkten**
Device for cooling products
Dispositif de refroidissement de produits

(30) Priorität: 11.01.2006 DE 102006001396
(43) Veröffentlichungstag der Anmeldung: 18.07.2007
(73) Patentinhaber: Messer France S.A.S., 92601 Asnières sur Seine Cédex (FR)
(72) Erfinder: Hussenot, Marie, 92100, Boulogne Billancourt (FR)
(74) Vertreter: Münzel, Joachim R.

(56) Entgegenhaltungen:
- US-A- 2 212 916
- US-A- 2 274 292
- US-A- 4 315 409
- US-A- 5 992 173
- US-A- 6 155 060

## Beschreibung

Die Erfindung betrifft eine Vorrichtung zum Kühlen oder Gefrieren von Produkten, mit einem Kühltunnel, mit einer zwischen einem Produkteingang und einem Produktausgang des Kühltunnels vorgesehenen Kühlzone, einem sich durch die Kühlzone hindurch erstreckenden Förderband zum Transportieren der Produkte, mit einer Einrichtung zum Zuführen eines Kühlmittels in die Kühlzone und mit einer Absaugeinrichtung für verbrauchtes Kühlmittel.

Derartige Vorrichtungen, die beispielsweise zum Haltbarmachen von Lebensmitteln für Mensch und Tier oder von pharmazeutischen Produkten zum Einsatz kommen, sind beispielsweise in der EP 0 667 503 A1, der EP 1 176 376 A1 oder der DE 10 2004 020 180 A1 beschrieben. Je nach Art des Transports der Produkte durch den Kühltunnel unterscheidet man Anlagen mit linear sich durch die Kühlzone hindurcherstreckendem Förderband (Linearkühler), spiralförmigem Förderband (Spiralkühler), oder es können mehrere übereinander angeordnete Transportbänder vorgesehen sein, wobei die zu kühlenden Produkte nacheinander alle Bänder durchlaufen (Etagenkühler). Als Kühlmittel wird häufig ein Flüssiggas, beispielsweise flüssiger Stickstoff oder flüssiges Kohlendioxid eingesetzt, das im Bereich der Kühlzone verdampft und dabei den Produkten Wärme entzieht. Da das Kühlmittel aus Gründen des Arbeitsschutzes nicht in den unmittelbaren Umgebungsbereich der meist in einer Halle aufgestellten Anlage gelangen darf, wird das verbrauchte Kühlmittel mittels einer Absaugeinrichtung aus der Kühleinrichtung abgeführt und unmittelbar ins Freie geleitet bzw. der Rückgewinnung oder einer anderweitigen Verwendung zugeführt.

Problematisch bei den Kühleinrichtungen nach dem Stand der Technik ist, dass beim Einbringen der zu kühlenden Gegenstände in die Behandlungszone feuchte Außenluft eindringen kann. Diese Luft gelangt zusammen mit dem Kühlmittel in die Absaugeinrichtung, wo die in der Luft enthaltende Feuchtigkeit aufgrund der dort herrschenden tiefen Temperaturen kondensiert und sich in Form von Eis an den Leitungen festsetzt. In der Folge kann es zu einer Beeinträchtigung der Absaugleistung bis hin zu einem völligen Ausfall der Absaugeinrichtung kommen, mit der Konsequenz, dass das Kühlmittel aus dem Kühltunnel austritt und das Bedienpersonal gefährdet.

Um ein Zufrieren der Absaugeinrichtung zu verhindern, muss daher die Kühleinrichtung in regelmäßigen Zeitabständen stillgelegt und enteist werden. Um wenigstens den dadurch hervorgerufenen Produktionsausfall auf ein Minimum zu beschränken, werden beispielsweise in der DE 103 38 214 B3 Kühltunnel mit einer verschwenkbaren Haubenkonstruktion vorgeschlagen. Dennoch sind auch hier regelmäßige wartungsbedingte Betriebspausen unvermeidlich.

Alternativ zur regelmäßigen Öffnung der Einrichtung ist es denkbar, die Absaugeinrichtung mit einer Heizung auszurüsten, oder aber zusätzliche Hilfsabsaugsysteme vorzusehen, die im Falle des Ausfalls der Hauptabsaugleitung zum Einsatz kommen. Diese Möglichkeiten führen jedoch zu einer komplizierten und daher in Herstellung und Betrieb aufwendigeren Kühlvorrichtung.

Aufgabe der vorliegenden Erfindung ist daher, eine Kühleinrichtung zu schaffen, die einfach im Aufbau ist und bei der regelmäßige, durch Eisbildung bedingte Betriebspausen vermieden werden.

Gelöst ist diese Aufgabe bei einer Vorrichtung der eingangs genannten Art dadurch, dass im Bereich des Produkteingangs und/oder des Produktausgangs eine Einrichtung zur Lufttrocknung vorgesehen ist.

Die erfindungsgemäße im Anspruch 1 dargestellt. Dabei ist Vorrichtung ist dem Produkteingang und/oder dem Produktausgang des Kühltunnels eine Einrichtung zum Trocknen zugeordnet, mittels der gewährleistet wird, dass nur vorgetrocknete Luft in den Bereich der Kühlzone einströmen kann. Das Eindringen von Feuchtigkeit wird so wesentlich reduziert und die Kühleinrichtung muss weniger häufig zwecks Enteisung stillgelegt werden.

Vorzugsweise umfasst die Einrichtung zur Lufttrocknung wenigstens eine dem Produkteingang bzw. dem Produktausgang zugeordnete Trocknungskammer, die von den Produkten vor Eintritt in die Kühlzone oder nach Verlassen der Kühlzone durchlaufen wird. Die Atmosphäre innerhalb der Trocknungskammer wird dabei kontinuierlich oder in regelmäßigen Abständen entfeuchtet.

Vorzugsweise ist die Einrichtung zur Lufttrocknung mit einem Adsorptionsentfeuchter zum Trocknen der Luft in der Trocknungskammer ausgerüstet. Adsortionsentfeuchter eignen sich besonders bei Temperaturen unter 10°C und ermöglichen eine besonders effektive Entfeuchtung auf Werte von unter 30% relative Feuchte. Bei dem Adsorptionsentfeuchter handelt es sich beispielsweise um ein kommerzielles Gerät, wie es etwa auch in Archiven eingesetzt wird.

Alternativ oder ergänzend zum vorgenannten Adsorptionsentfeuchter kommt in einer weiteren Ausgestaltung der Erfindung ein Kondensationsentfeuchter zum Einsatz, dessen Kühlaggregat mit der Absaugeinrichtung für das Kühlmittel wirkverbunden ist. Der Kondensationsentfeuchter arbeitet also mit dem verbrauchten Kühlgas aus der Absaugeinrichtung als Kältemittel, das auf diese Weise einer weiteren Nutzung zugeführt wird.

Als Kühlmittel wird im Kühltunnel bevorzugt ein Flüssiggas eingesetzt, beispielsweise flüssiges oder kaltes gasförmiges Kohlendioxid oder flüssiger oder kalter gasförmiger Stickstoff.

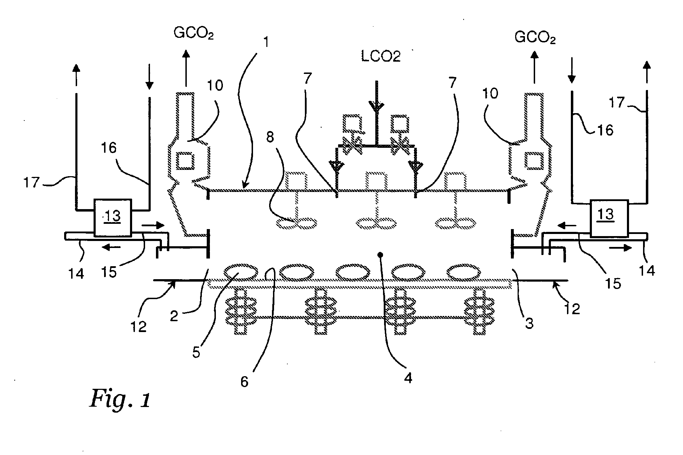

Anhand der Zeichnung soll ein Ausführungsbeispiel der Erfindung näher erläutert werden. Funktionsgleiche Merkmale erhalten im Folgenden jeweils die gleichen Bezugsziffern.

Die einzige Zeichnung zeigt schematisch eine erfindungsgemäße Vorrichtung zum Kühlen von Produkten. Dabei handelt es sich um einen Linearkühler, wie er häufig zum Kühlen oder Frosten von Lebensmitteln verwendet wird. Die Vorrichtung umfasst einen langgestreckten Kühltunnel 1, der an seinen Stirnenden einen Produkteingang 2 und einen Produktausgang 3 aufweist. Zwischen dem Produkteingang 2 und dem Produktausgang 3 erstreckt sich eine Kühlstrecke 4, durch die die zu kühlenden Produkte 5 auf einem Förderband 6 hindurch transportiert werden. In der Kühlstrecke 4 werden die Produkte mit einem kryogenen Kältemittel beaufschlagt, das aus mehreren, ausgangsseitig mit Sprühdüsen ausgerüsteten Kühlmittelzuleitungen 7 in das Innere des Kühltunnels 1 eingesprüht wird. Bei dem Kühlmittel handelt es sich beispielsweise um Kohlendioxid, das aus einer hier nicht gezeigten Quelle in flüssigem Zustand herangeführt und beim Eintritt in das Innere des Kühltunnels 1 unter starker Abkühlung zu Kohlendioxidgas und Trockeneis entspannt wird. Alternativ handelt es sich bei dem Kühlmittel beispielsweise um Stickstoff, der als kaltes Gas oder flüssig auf die Produkte 5 aufgesprüht wird. Um das Kühlmittel möglichst homogen im Kühltunnel 1 zu verteilen, sind im Deckenbereich des Kühltunnels 1 Ventilatoren 8 angeordnet. Das erwärmte Kühlmittelgas wird über im Bereich des Produkteingangs 2 und des Produktausgangs 3 angeordnete Absaugeinrichtungen 10 aus dem Kühltunnel 1 abgesaugt und ins Freie geleitet oder einer anderen Verwendung zugeführt. Die Absaugeinrichtungen 10 sind so ausgelegt, dass im Wesentlichen so viel Gas abgesaugt wird, wie durch die Zuführung des Kühlmittels im Kühltunnel 1 entsteht. Dadurch soll insbesondere sichergestellt werden, dass kein Kühlmittel in den Außenbereich der Vorrichtung gelangt und das Bedienpersonal gefährdet.

Eine hier nicht gezeigte Steuerung ermöglicht die genaue Abstimmung von zugeführter Kühlmittelmenge und Absaugleistung unter Berücksichtigung der gewünschten Temperatur im Innern des Kühltunnels 1. Um zu verhindern, dass Feuchtigkeit auf der Außenwand des Kühltunnels 1 kondensiert, ist die Kühlstrecke 4 von einer thermisch Isolierten und weitgehend gasdicht abgeschlossenen Wandung umgeben, die nur im Bereich des Produkteingangs 2 und des Produktausgangs 3, der Kühlmittelzuführungen 7 und der Absaugeinrichtungen 10 unterbrochen ist.

Um das Eindringen von Luftfeuchtigkeit durch den Produkteingang 2 bzw. den Produktausgang 3 zu verhindern oder zumindest zu reduzieren, befinden sich frontseitig im Bereich des Produkteingangs 2 bzw. des Produktausgangs 3 Trockenkammern 12. Die Atmosphäre in den Trockenkammern 12 wird laufend entfeuchtet. Dazu sind die Trockenkammern 12 jeweils mit Entfeuchtern 13 wirkverbunden. Bei den Entfeuchtern 13 handelt es sich im Ausführungsbeispiel um Adsorptionsentfeuchter, bei denen die zu entfeuchtende Luft jeweils aus der Trockenkammer 12 über eine Ableitung 14 einem Adsorbermaterial, beispielsweise einem Silikatgel, zugeführt wird, das der Luft Feuchtigkeit entzieht. Die getrocknete Luft wird über eine Zuleitung 15 wieder in die Trockenkammer 12 zurück geleitet. Das Adsorbermaterial wird in bekannter Weise regeneriert, indem verbrauchtes Adsorbermaterial einem Warmgasstrom ausgesetzt wird, der über eine Regenerationsgasleitung 16 herangeführt wird. Das warme Regenerationsgas nimmt die Feuchtigkeit aus dem Adsorbermaterial auf und wird über eine Abgasleitung 17 abgeleitet.

Beim Betrieb der Vorrichtung werden die Produkte 5 durch die Trockenkammern 12 hindurch in den Kühltunnel 1 transportiert. Die in den Trockenkammern 12 befindliche Atmosphäre, die durch feuchte Außenluft angereichert ist, die mit den Produkten 5 mitgeführt oder aufgrund der Wirkung der Absaugeinrichtungen 10 in das Innere der Trockenkammern 12 gelangt ist, wird mittels der Entfeuchter 13 getrocknet. Auf diese Weise wird sichergestellt, dass nur vorgetrocknete Luft durch den Produkteingang 2 bzw. den Produktausgang 3 in das Innere der Kühlkammer 1 eindringen kann. Die Vereisung der Absaugeinrichtungen 10 wird so deutlich reduziert. Ein Dauerbetrieb der erfindungsgemäßen Vorrichtung, völlig ohne enteisungsbedingte Betriebspausen, kann dadurch erreicht werden, dass die Absaugeinrichtungen 10 jeweils mit einer Heizeinrichtung ausgerüstet werden, mittels der ein sich bildender Eisfilm kontinuierlich oder in regelmäßigen Abständen abgetaut wird. Aufgrund der Vortrocknung der eindringenden Luft kann eine solche Heizeinrichtung weitaus geringer dimensioniert werden als bei Kühlvorrichtungen nach dem Stande der Technik.

Anstelle des hier gezeigten linear aufgebauten Kühltunnels 1 können auch andere Kühltunneltypen mit entsprechenden Einrichtungen 12,13 zum Trocknen ausgerüstet werden, beispielsweise Spiralkühler oder Etagenkühler.

### Bezugszeichenliste

- 1.: Kühltunnel
- 2.: Produkteingang
- 3.: Produktausgang
- 4.: Kühlstrecke
- 5.: Produkt
- 6.: Förderband
- 7.: Kühlmittelzuleitung
- 8.: Ventilator
- 9.: -
- 10.: Absaugeinrichtung
- 11.: -
- 12.: Trockenkammer
- 13.: Entfeuchter
- 14.: Ableitung (für feuchte Luft)
- 15.: Zuleitung (für getrocknete Luft)
- 16.: Regenerationsgasleitung
- 17.: Abgasleitung

## Patentansprüche

1. Vorrichtung zum Kühlen oder Gefrieren von Produkten, mit einem Kühltunnel (1), mit einer zwischen einem Produkteingang (2) und einem Produktausgang (3) des Kühltunnels (1) vorgesehenen Kühlzone (4), einem sich durch die Kühlzone (4) hindurch erstreckenden Förderband (6) zum Transportieren der Produkte, mit einer Einrichtung zum Zuführen eines Kühlmittels in die Kühlzone (4) und mit einer Absaugeinrichtung (10) für verbrauchtes Kühlmittel,
**dadurch gekennzeichnet,**
**dass** im Bereich des Produkteingangs und/oder des Produktausgangs eine Einrichtung (12,13) zur Lufttrocknung vorgesehen ist, die wenigstens eine dem Produkteingang (2) bzw. dem Produktausgang (3) zugeordnete Trocknungskammer (12) aufweist, die von den Produkten vor Eintritt in die Kühlzone (4) bzw. nach Verlassen der Kühlzone durchlaufen wird, und die mit einem Entfeuchter (13) zum Entfeuchten der Atmosphäre in der Trockenkammer (12) wirkverbunden ist.

2. Vorrichtung nach Anspruch 1, **dadurch gekennzeichnet, dass** die Einrichtung zur Lufttrocknung einen Adsorptionsentfeuchter (13) zum Trocknen der Luft in der Trocknungskammer (12) umfasst.

3. Vorrichtung nach Anspruch 2, **dadurch gekennzeichnet, dass** die zu entfeuchtende Luft aus den Trockenkammern (12) über eine Ableitung (14) einem Adsorbermaterial zugeführt und die getrocknete Luft anschließend über eine Zuleitung (15) wieder in die Trockenkammer (12) zurückgeleitet wird.

4. Vorrichtung nach einem der vorhergehenden Ansprüche, **dadurch gekennzeichnet, dass** die Einrichtung zur Lufttrocknung (12,13) einen Kondensationsentfeuchter umfasst, dessen Kühlaggregat mit der Absaugeinrichtung (10) für das Kühlmittel wirkverbunden ist.

5. Vorrichtung nach einem der vorhergehenden Ansprüche, **dadurch gekennzeichnet, dass** als Kühlmittel ein Flüssiggas, beispielsweise flüssiges oder kaltes gasförmiges Kohlendioxid oder flüssiger oder kalter gasförmiger Stickstoff zum Einsatz kommt.

## Claims

1. Apparatus for the cooling or freezing of products, with a cooling tunnel (1), with a cooling zone (4) provided between a product entrance (2) and a product exit (3) of the cooling tunnel (1), with a conveyer belt (6), extending through the cooling zone (4), for transporting the products, with a device for feeding a coolant into the cooling zone (4), and with a suction-extraction device (10) for spent coolant, **characterized in that**, in the region of the product entrance and/or of the product exit, a device (12, 13) for air drying is provided, which has at least one drying chamber (12) which is assigned to the product entrance (2) or to the product exit (3) and through which the products run before they enter the cooling zone (4) or after they leave the cooling zone, and which is operatively connected to a dehumidifier (13) for dehumidifying the atmosphere in the drying chamber (12).

2. Apparatus according to Claim 1, **characterized in that** the device for air drying comprises an adsorption dehumidifier (13) for drying the air in the drying chamber (12).

3. Apparatus according to Claim 2, **characterized in that** the air to be dehumidified is fed out of the drying chambers (12) via a discharge line (14) to an adsorber material and the dried air is subsequently conducted back into the drying chamber (12) again via a supply line (15).

4. Apparatus according to one of the preceding claims, **characterized in that** the device for air drying (12, 13) comprises a condensation dehumidifier, the cooling assembly of which is operatively connected to the suction-extraction device (10) for the coolant.

5. Apparatus according to one of the preceding claims, **characterized in that** the coolant used is a liquid gas, for example liquid or cold gaseous carbon dioxide or liquid or cold gaseous nitrogen.

## Revendications

1. Dispositif de refroidissement ou de congélation de produits, qui présente
un tunnel de refroidissement (1),
une zone de refroidissement (4) prévue entre une entrée (2) de produits et une sortie (3) de produits du tunnel de refroidissement (1),
une bande transporteuse (6) qui s'étend dans la zone de refroidissement (4) pour transporter les produits,
un dispositif d'amenée d'un agent frigorifique dans la zone de refroidissement (4) et
un dispositif (10) d'aspiration de l'agent frigorifique épuisé,
**caractérisé en ce qu'**un dispositif (12, 13) de séchage d'air qui présente au moins une chambre (12) de séchage associée à l'entrée (2) de produits ou à la sortie (3) de produits, qui est traversé par les produits avant leur entrée dans la zone de refroidissement (4) ou après qu'ils ont quitté la zone de refroidissement et qui coopère avec un déshumidificateur (13) qui déshumidifie l'atmosphère qui règne dans la chambre de séchage (12) est prévu dans la zone d'entrée des produits et/ou dans la zone de sortie des produits.

2. Dispositif selon la revendication 1, **caractérisé en ce que** le dispositif de séchage d'air comprend un déshumidificateur (13) à adsorption qui sèche l'air présent dans la chambre de séchage (12).

3. Dispositif selon la revendication 2, **caractérisé en ce que** l'air à déshumidifier provenant des chambres de séchage (12) est apporté à un matériau adsorbant par un conduit (14) et **en ce que** l'air séché est ensuite renvoyé dans la chambre de séchage (12) par un conduit (15).

4. Dispositif selon l'une des revendications précédentes, **caractérisé en ce que** le dispositif de séchage d'air (12, 13) comprend un déshumidificateur à condensation dont l'ensemble de refroidissement coopère avec le dispositif d'aspiration (10) de l'agent de refroidissement.

5. Dispositif selon l'une des revendications précédentes, **caractérisé en ce qu'**il utilise comme agent de refroidissement un gaz liquéfié, par exemple du dioxyde de carbone liquide ou gazeux et refroidi ou de l'azote liquide ou gazeux et refroidi.
